# EUROPÄISCHE PATENTSCHRIFT

(11) **EP 3 272 589 B1**
(45) Veröffentlichungstag und Bekanntmachung des Hinweises auf die Patenterteilung: **15.05.2019**
(21) Anmeldenummer: 17179537.0
(22) Anmeldetag: 04.07.2017
(51) Int. Cl.: B60R 11/04, E05D 11/00

(54) **SCHARNIERABDECKUNG EINES NUTZFAHRZEUGS ZUR AUFNAHME EINER BILDERFASSUNGSEINHEIT**
HINGE COVER OF A COMMERCIAL VEHICLE FOR ACCOMMODATING AN IMAGE ACQUISITION UNIT
RECOUVREMENT DE CHARNIÈRE D'UN VÉHICULE UTILITAIRE DESTINÉ À LA RÉCEPTION D'UNE UNITÉ DE CAPTURE D'IMAGES

(30) Priorität: 23.07.2016 DE 102016008963
(43) Veröffentlichungstag der Anmeldung: 24.01.2018
(73) Patentinhaber: MAN Truck & Bus AG, 80995 München (DE)
(72) Erfinder: Zaindl, Albert, 85302 Gerolsbach (DE); Schmidl, Julian, 80809 München (DE); Wiatrowski, Andrzej, 82258 Fürstenfeldbruck (DE)
(74) Vertreter: v. Bezold & Partner Patentanwälte - PartG mbB

(56) Entgegenhaltungen:
- WO-A1-2015/105252
- DE-U1-202004 014 778
- JP-U- H0 315 281

## Beschreibung

Die Erfindung betrifft eine Scharnierabdeckung eines Nutzfahrzeugs zur Aufnahme einer Bilderfassungseinheit an einer A-Säule des Nutzfahrzeugs. Insbesondere betrifft die Erfindung ein Nutzfahrzeug mit einer solchen an der A-Säule des Nutzfahrzeugs befestigten Scharnierabdeckung.

Bei einer zunehmenden Anzahl von Fahrzeugen dienen Systeme mit einer außenseitigen Kamera und einer innenseitigen Anzeige dazu, Spiegel im Außenbereich des Fahrzeugs zu ersetzen. Dies ist insbesondere bei Nutzfahrzeugen, wie beispielsweise Bussen, Lastwagen und Zugmaschinen der Fall, die eine Vielzahl an Außenspiegeln für den Fahrbetrieb, zum Be- und Entladen oder beim Standeinsatz (beispielsweise von Baustellenfahrzeugen oder Rettungsfahrzeugen) benötigen.

Das Dokument DE 20 2005 013 989 U1 beschreibt eine omnidirektionale Kamera, die an der Fahrzeugaußenhaut unterhalb der Höhe der Fahrzeugaußenspiegel angeordnet ist. Als vorteilhafte Einbauorte für die Kamera sind eine Position nahe einem der Fahrzeugscheinwerfer, nahe der Motorhaube und an der Fahrzeugrückfront genannt. Das Dokument DE 20 2004 014 778 U1 zeigt eine Kamera die über eine Montageplatte und einen Haltearm an der A-Säule eines Nutzfahrzeuges montiert ist.

Solche Positionen erfordern jedoch zusätzliche Anbauten, welche die Fahrzeugaerodynamik verschlechtern. Auch müssen innenseitig zusätzliche Kabelstränge zu diesen Positionen verlegt werden und an diesen Positionen die Fahrzeughaut zusätzlich durchbrochen werden. Somit besteht eine Aufgabe der vorliegenden Erfindung darin, eine Technik zur außenseitigen Bilderfassung anzugeben, welche die Fahrzeugaerodynamik nicht oder nur unwesentlich beeinträchtigt. Eine weitere oder alternative Aufgabe besteht darin, die außenseitige Bilderfassung ohne zusätzliche Durchgangsausnehmungen in der Fahrzeugkarosserie zu ermöglichen.

Diese Aufgabe oder Aufgaben werden durch eine Technik mit den Merkmalen des unabhängigen Anspruches 1 gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß der Erfindung ist eine Scharnierabdeckung für eine an einer A-Säule eines Nutzfahrzeugs angeschlagene Fahrzeugtür nach Anspruch 1 bereitgestellt. Die Scharnierabdeckung umfasst eine Anlagefläche, die außenseitig an der A-Säule auf Höhe eines Scharniers der Fahrzeugtür anliegt oder in Anlage bringbar ist. Die Anlagefläche ist in einer horizontalen Ebene gekrümmt. Die Scharnierabdeckung umfasst ferner ein Gehäuse zur Aufnahme einer Bilderfassungseinheit und mit einer Objektivöffnung zum Lichteinfall quer zur horizontalen Ebene.

Durch das Gehäuse kann die Bilderfassungseinheit in die Scharnierabdeckung integriert oder in der Scharnierabdeckung verbaut sein. Indem die Bilderfassungseinheit in der Abdeckung des Scharniers an der A-Säule aufgenommen oder aufnehmbar ist, sind zusätzliche Fahrtwindangriffsflächen an der Fahrzeugaußenhaut und/oder zusätzliche Durchgangsausnehmungen in der Fahrzeugkarosserie vermeidbar.

Durch die Aufnahme der Bilderfassungseinheit in der Scharnierabdeckung können zusätzliche Verkleidungsbauteile vermieden werden. Die Bilderfassungseinheit kann einen oder mehrere Außenspiegel ersetzen. Durch die Aufnahme der Bilderfassungseinheit in der Scharnierabdeckung und/oder den Ersatz eines oder mehrerer Außenspiegel kann die Aerodynamik des Nutzfahrzeugs verbessert werden.

Die horizontale Ebene kann, beispielsweise in einem bestimmten Abschnitt der Anlagefläche, senkrecht zur Anlagefläche sein. Beispielsweise kann jede Ebene die zumindest abschnittsweise senkrecht zur Anlagefläche ist und/oder in der die Anlagefläche gekrümmt ist, die "horizontale Ebene" bestimmen. Die Anlagefläche kann "in der horizontalen Ebene gekrümmt" sein, indem eine Schnittlinie der Anlagefläche und der horizontalen Ebene gekrümmt ist. Im befestigten Zustand der Scharnierabdeckung kann die "horizontale Ebene" parallel zu einer Fahrbahnebene des Nutzfahrzeugs sein.

Die Krümmung der Anlagefläche und/oder Befestigungselemente an der Anlagefläche können Position und/oder Ausrichtung der Scharnierabdeckung bezüglich der A-Säule bestimmen. Die Bilderfassungseinheit und/oder die Objektivöffnung können auf einen Sichtbereich nach Sichtfeldklasse VI (beispielsweise zum Ersatz eines Frontspiegels) und/oder einen Sichtbereich nach Sichtfeldklasse V (beispielsweise zum Ersatz eines Anfahrspiegels) gerichtet sein.

Auf beiden Seiten des Nutzfahrzeugs kann an der A-Säule jeweils eine Scharnierabdeckung befestigt sein. Scharnierabdeckungen mit Bilderfassungseinheiten können beidseitig installiert sein für Übergänge zwischen Links- und Rechtsverkehr, beispielsweise im Transitverkehr zwischen Großbritannien und Kontinentaleuropa.

Die Bilderfassungseinheit kann auch als Kamera oder Frontkamera bezeichnet werden. Die Bilderfassungseinheit kann einen Bildsensor, beispielsweise auf Halbleiterbasis, umfassen. Der Bildsensor kann ein ladungsgekoppeltes Bauteil (auch: Charge-Coupled Device oder CCD) oder einen komplementären Metall-Oxide-Halbleiter (auch: Complementary Metal-Oxide-Semiconductor oder CMOS) umfassen.

Die Scharnierabdeckung kann eine (bezüglich des Fahrerhauses und/oder der A-Säule) feststehende Abdeckung des Scharniers sein. Das Scharnier kann durch eine weitere (mit der Fahrzeugtür) schwenkbewegliche Abdeckung verkleidet sein, die beispielsweise außenseitig an der Fahrzeugtür anliegt oder in Anlage bringbar ist. Die Scharnierabdeckung und/oder die schwenkbewegliche Abdeckung können Teil eines Seitenspiegelfußes sein. Die Scharnierabdeckung kann ein (bezüglich des Fahrerhauses und/oder der A-Säule) feststehender Teil des Seitenspiegelfußes sein.

Das Scharnier kann das oberste Scharnier der Fahrzeugtür sein. Das Scharnier kann auf der Höhe oder direkt unterhalb einer Unterkante der Windschutzscheibe oder Frontscheibe angeordnet sein.

Die Objektivöffnung kann in einer Gehäusewand des Gehäuses angeordnet sein. Die Gehäusewand, in der die Objektivöffnung angeordnet ist, kann (beispielsweise im Wesentlichen) parallel zur horizontalen Ebene sein. Die Objektivöffnung kann eine Durchgangsöffnung in der Gehäusewand zum Inneren des Gehäuses umfassen. Alternativ oder ergänzend kann die Objektivöffnung ein Objektiv und/oder ein transparentes Fenster umfassen. Beispielsweise kann die Durchgangsöffnung mit Glas (insbesondere Silikat-Glas oder Polymethylmethacrylat, PMMA) fluiddicht verschlossen sein. Die Objektivöffnung kann auch als Apertur bezeichnet werden.

Die Objektivöffnung kann am Gehäuse positioniert und/oder ausgerichtet sein, so dass bei an der A-Säule anliegender Anlagefläche die Objektivöffnung nach unten gerichtet und/oder nach unten offen ist.

Eine Richtung des Lichteinfalls durch die Objektivöffnung kann senkrecht zur horizontalen Ebene sein oder um weniger als 20°, beispielsweise um weniger als 10°, von einer Senkrechten zur horizontalen Ebene abweichen. Alternativ oder ergänzend kann die durch die Objektivöffnung eingegrenzte oder bestimmte Richtung des Lichteinfalls parallel zu einer Längsrichtung der A-Säule sein oder um weniger als 20°, beispielsweise um weniger als 10°, von der Längsrichtung der A-Säule abweichen.

Die Bilderfassungseinheit kann eine auf einen Frontbereich des Nutzfahrzeugs gerichtete optische Achse oder eine zur Frontfläche des Nutzfahrzeugs (zumindest im Wesentlichen) parallele optische Achse umfassen. Das Gehäuse und/oder die Objektivöffnung können eine optische Achse der Bilderfassungseinheit definieren. Beispielsweise kann die optische Achse (zumindest im Wesentlichen) senkrecht zur Gehäusewand des Gehäuses sein, in der die Objektivöffnung angeordnet ist. Die optische Achse kann von der Senkrechten zur horizontalen Ebene, von einer Vertikalen und/oder einer Längsrichtung der A-Säule um weniger als 20°, beispielsweise um weniger als 10°, abweichen.

Die Anlagefläche kann durch mindestens eine umlaufende Kante gebildet sein oder mindestens eine umlaufende Kante umfassen. Die umlaufende Kante kann eine Dichtung umfassen. Die umlaufende Kante kann offen oder umlaufend geschlossen sein. Die Kante kann bis auf eine (beispielsweise zur Fahrzeugtür gerichtete) Aussparung in der Scharnierabdeckung umlaufend sein. Die Scharnierabdeckung kann einen (zumindest im Wesentlichen) rechteckigen Fuß oder Grundkörper umfassen, an dem die umlaufende Kante angeordnet ist. Die Kante kann zweiseitig oder dreiseitig umlaufend sein.

Die Scharnierabdeckung (beispielsweise die Anlagefläche und/oder das Gehäuse) kann mindestens eine Durchgangsöffnung zur Schraubverbindung der Scharnierabdeckung mit der A-Säule aufweisen. Alternativ oder ergänzend kann die Scharnierabdeckung (beispielsweise die Anlagefläche) Verbindungselemente umfassen, die dazu ausgebildet sind, die Scharnierabdeckung mit der A-Säule zu verbinden. Die Verbindungselemente können Befestigungsclips oder Federklemmen umfassen.

Das Gehäuse kann bezüglich der Anlagefläche feststehend, beispielsweise drehfest, sein. Beispielsweise kann ein Boden des Gehäuses die Anlagefläche umfassen. Das Gehäuse und/oder die Verbindungselemente können integral-einstückig mit der Anlagefläche sein. Beispielsweise umfassen Anlagefläche, Gehäuse und/oder Verbindungselemente durch Spritzguss verarbeitete Polyamide.

Die Bilderfassungseinheit kann im Gehäuse drehfest aufgenommen oder aufnehmbar sein. Das Gehäuse kann gegenüber der A-Säule im befestigten Zustand der Scharnierabdeckung drehfest sein.

Eine Gehäusewand des Gehäuses, in der die Objektivöffnung angeordnet ist, kann aus der Anlagefläche auskragen. Eine Länge (oder ein Überstand) der Auskragung kann so bemessen sein, dass die Objektivöffnung aus der Fahrzeugfrontfläche hervorragt. Die Objektivöffnung kann in Fahrtrichtung über Windleitflächen hervorstehen, die beispielsweise seitlich an der Fahrzeugfront angeordnet sind.

Alternativ oder in Kombination kann eine Richtung der Auskragung gegenüber der Fahrtrichtung zur Fahrzeugseite geneigt sein. Die Richtung der Auskragung kann in der horizontalen Ebene um mindestens 30° gegenüber der Fahrtrichtung nach außen (oder zur Seite) geneigt sein, beispielsweise um etwa 45° zur Längsrichtung. Dadurch kann der von der Bilderfassungseinheit erfasste Sichtbereich sowohl einen Frontbereich als auch einen Seitenbereich umfassen.

Die Scharnierabdeckung, beispielsweise das Gehäuse, kann einen Kabelkanal umfassen. Der Kabelkanal kann in eine Öffnung in der Anlagefläche münden. Durch den Kabelkanal und die Öffnung in der Anlagefläche kann eine verdeckte und durch die Scharnierabdeckung (beispielsweise vor Fahrtwind, Regenwasser, Spritzwasser und Witterung) geschützte Kabelführung von der Bilderfassungseinheit in die A-Säule ermöglicht sein.

Die Anlagefläche kann (zumindest abschnittsweise) senkrecht zur horizontalen Ebene sein.

Ferner betrifft die Erfindung ein Nutzfahrzeug, an dessen A-Säule eine Scharnierabdeckung gemäß einem der Ansprüche 1-9 angeordnet ist.

Das Nutzfahrzeug kann insbesondere ein Lastkraftwagen, ein Zugfahrzeug (beispielsweise der LKW in einem LKW-Gespann oder eine Sattelzugmaschine) oder ein Bus (beispielsweise für den Stadtverkehr, Nahverkehr oder Fernverkehr) sein.

An mindestens einer A-Säule des Nutzfahrzeugs ist eine Scharnierabdeckung gemäß einem der Ansprüche 1-9 angeordnet. Im Gehäuse der Scharnierabdeckung ist eine Bilderfassungseinheit angeordnet oder anordenbar, so dass der Lichteinfall durch die Objektivöffnung in ein Objektiv der Bilderfassungseinheit fällt.

Die Scharnierabdeckung kann an der beifahrerseitigen A-Säule angeordnet sein. Alternativ kann an der fahrerseitigen A-Säule oder an jeder A-Säule des Nutzfahrzeugs jeweils eine Scharnierabdeckung gemäß einer Ausführungsform des erstgenannten Aspekts mit darin aufgenommener Bilderfassungseinheit angeordnet sein.

Die Scharnierabdeckung kann auf einer Höhe unterhalb einer Unterkante einer Frontscheibe oder Windschutzscheibe des Nutzfahrzeugs angeordnet sein. Alternativ oder ergänzend kann die Scharnierabdeckung auf einer Höhe oberhalb von Trittstufen des Nutzfahrzeugs angeordnet sein.

Das Nutzfahrzeug kann ferner eine oder mehrere Anzeigen umfassen, die zur Bildwiedergabe mit der Bilderfassungseinheit in Signalverbindung stehen. Die Signalverbindung kann einen Kabelstrang umfassen, der durch den Kabelkanal in der Scharnierabdeckung und die Öffnung in der Anlagefläche verläuft.

Beispielsweise ist eine Anzeige an einer Mittelkonsole des Nutzfahrzeugs angeordnet. Die Anzeige an einer Mittelkonsole oder eine damit in Signalverbindung stehende Steuerung kann dazu ausgebildet sein, bei gelöster Feststellbremse und/oder Fahrt des Nutzfahrzeugs (beispielsweise für eine Fahrtgeschwindigkeit bis zu 10 km/h oder mehr) das von der Bilderfassungseinheit erfasste Bild wiederzugeben.

Alternativ oder ergänzend ist eine Anzeige innenseitig an der A-Säule angeordnet. Die Anzeige oder eine damit in Signalverbindung stehende Steuerung kann dazu ausgebildet sein, das von der Bilderfassungseinheit erfasste Bild wiederzugeben. Die Bildwidergabe an der A-Säule kann geschwindigkeitsunabhängig und/oder permanent sein.

Weitere Einzelheiten und Vorteile der Erfindung werden im Folgenden unter Bezug auf die beigefügten Zeichnungen beschrieben. Es zeigen:
- Figur 1: eine schematische perspektivische Darstellung eines Ausführungsbeispiels eines Nutzfahrzeugs;
- Figur 2: eine schematische perspektivische Darstellung eines ersten Ausführungsbeispiels einer Scharnierabdeckung;
- Figur 3: eine schematische perspektivische Darstellung eines zweiten Ausführungsbeispiels einer Scharnierabdeckung;
- Figur 4: eine schematische Wiedergabe einer Anzeige, die mit einer Bilderfassungseinheit in Signalverbindung steht, welche in der Scharnierabdeckung angeordnet ist; und
- Figur 5: ein Vergleichsbeispiel einer perspektivischen Darstellung eines Frontspiegels.

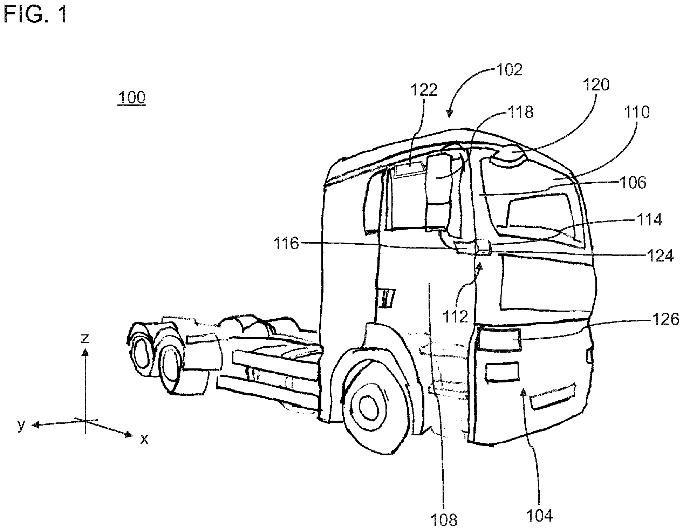

Figur 1 zeigt schematisch eine perspektivische Darstellung eines beispielhaften und allgemein mit Bezugszeichen 100 bezeichneten Nutzfahrzeugs. Das Nutzfahrzeug 100 umfasst ein Fahrerhaus 102 mit einer Fahrzeugfront 104 und auf jeder Fahrzeugseite jeweils im Wesentlichen vertikal angeordneten A-Säule 106 zwischen Fahrzeugtür 108 und Frontscheibe 110.

Die Fahrzeugtür 108 ist an der A-Säule 106 über mindestens ein Scharnier 112 schwenkbeweglich befestigt. Das Scharnier 112 ist beispielsweise unterhalb oder auf Höhe einer Unterkante der Frontscheibe 110 entlang der A-Säule 106 angeordnet.

Das Scharnier 112 ist außenseitig des Fahrerhauses 112 durch eine Scharnierabdeckung 114 verblendet. Beispielsweise ist das Scharnier 112 in einer Aussparung der A-Säule 106 zumindest teilweise angeordnet und zur Außenhaut des Nutzfahrzeugs 100 mit der Scharnierabdeckung 114 verkleidet.

Vorzugsweise ist auf Höhe der Scharnierabdeckung 114 an der Fahrzeugtür 108 ein Seitenspiegelfuß 116 für einen oder mehrere Seitenspiegel 118 angeordnet. Der Seitenspiegelfuß 116 kann ein mit der Fahrzeugtür 108 schwenkbeweglicher Befestigungspunkt, beispielsweise für einen Seitenspiegel der Sichtfeldklasse II und/oder einen Weitwinkelspiegel der Sichtfeldklasse IV sein.

Alternativ oder ergänzend fungiert der Seitenspiegelfuß 116 als türseitige Scharnierabdeckung des Scharniers 112. Beispielsweise ist ein schwenkbeweglicher Teil des Scharniers 112 an der Fahrzeugtür 108 verschraubt und durch den Seitenspiegelfuß 116 verblendet.

Optional umfasst das Fahrerhaus 102 ferner einen Frontspiegel 120 (beispielsweise gemäß der europäischen Sichtfeldklasse VI), der oberhalb der Frontscheibe 110 (beispielsweise an der A-Säule 106) befestigt ist und/oder einen an der Fahrzeugtür 108 befestigten Anfahrspiegel 122 (beispielsweise gemäß europäischer Sichtfeldklasse V).

Die Scharnierabdeckung 114 umfasst ein Gehäuse 124 zur Aufnahme einer Bilderfassungseinheit. Eine optische Achse der Bilderfassungseinheit ist nach unten, beispielsweise parallel zur Längsrichtung der A-Säule 106, gerichtet. Beispielsweise ist die optische Achse der Bilderfassungseinheit zur Erfassung eines Bildausschnitts vor der Fahrzeugfront 104 und/oder seitlich von der Fahrzeugtür 108 ausgerichtet. Die Ausrichtung der optischen Achse kann anhand der Scharnierabdeckung 114 durch eine Objektivöffnung im Gehäuse 124 und/oder eine Halterung im Gehäuse 124 zur Aufnahme der Bilderfassungseinheit bestimmt sein.

Eine Oberfläche der A-Säule 106 ist zum Übergang von der Fahrzeugfront 104 zur Fahrzeugtür 108 in einer horizontalen Ebene gekrümmt. Die Scharnierabdeckung 114 umfasst eine Anlagefläche 130, die entsprechend in der horizontalen Ebene x-y gekrümmt ist, beispielsweise zur umlaufenden Anlage an der entsprechend gekrümmten A-Säule 106.

An der Fahrzeugfront 104 ist beispielsweise auf jeder Seite des Fahrzeughauses 102, eine Windleitfläche 126 angeordnet. Die Windleitfläche 126 wird auch als Windabweiser bezeichnet. Das aus der Perspektive der Scharnierabdeckung 114 erfasste Bild kann in einem Randbereich die Windleitfläche 126 umfassen.

Im in Figur 1 gezeigten Ausführungsbeispiel des Nutzfahrzeugs 100 ist die Scharnierabdeckung 114 auf der Beifahrerseite des Fahrerhauses 102 angeordnet. Optional ist eine entsprechende Scharnierabdeckung 114 jeweils auf beiden Seiten (fahrerseitig und beifahrerseitig) des Fahrerhauses 102 angeordnet.

Das durch die in der Scharnierabdeckung 114 angeordnete Bilderfassungseinheit erfasste Bild kann, beispielsweise dauerhaft oder betriebsabhängig, an einer oder mehreren Anzeigen innerhalb des Fahrerhauses 102 wiedergegeben werden. Beispielsweise kann das erfasste Bild an einer Anzeige in der Mittelkonsole im Fahrerhaus 102 und/oder an einer Anzeige, die innenseitig an der entsprechenden A-Säule 106 angeordnet ist, angezeigt werden. Beispielsweise ist bei stehendem Nutzfahrzeug 100 (keine Fahrgeschwindigkeit) und betätigter Feststellbremse die Anzeige in der Mittelkonsole durch den Benutzer wählbar. Bei gelöster Feststellbremse oder einer Fahrgeschwindigkeit <10 km/h zeigt die Anzeige in der Mittelkonsole das von der Bilderfassungseinheit erfasste Bild an, vorzugsweise unabhängig von der Benutzereingabe.

Alternativ oder ergänzend gibt eine an der Innenseite der A-Säule 106 angeordnete Anzeige das von der Bilderfassungseinheit erfasst Bild dauerhaft (beispielsweise bei eingeschalteter Zündung und/oder Fahrzeugbewegung) an.

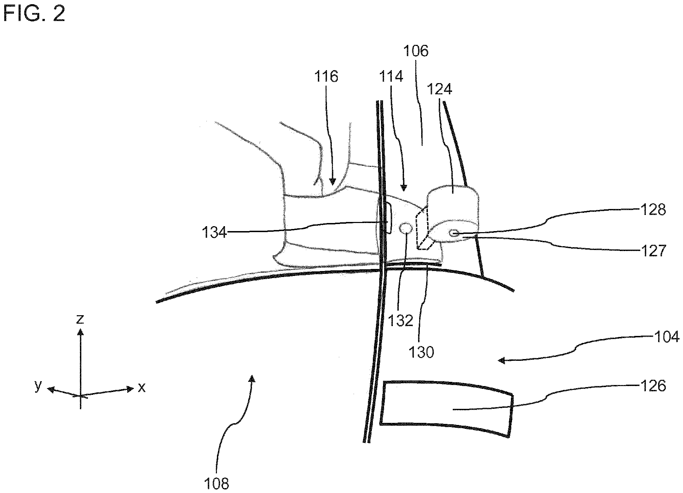

Figur 2 zeigt schematisch ein erstes Ausführungsbeispiel der Scharnierabdeckung 114. Das Gehäuse 124 der Scharnierabdeckung 114 kragt gegenüber der Oberfläche der A-Säule 106 zumindest an einer Gehäusewand 127 aus, so dass die Objektivöffnung 128 in der Gehäusewand 127 über die Fahrzeugfront 104, beispielsweise über die Windleitfläche 126, hervorragt.

Beispielsweise ist das Gehäuse 124 ein Zylinder, dessen Zylinderachse parallel zur optischen Achse der darin aufgenommenen Bilderfassungseinheit ist. Die untere Stirnfläche des Zylinders ist Teil der auskragenden Gehäusewand 127. Ein Objektiv der Bilderfassungseinheit ist in der Objektivöffnung 128 oder entlang der optischen Achse innerhalb des Gehäuses 124 angeordnet.

Die optische Achse schließt mit der (verlängerten) Längsrichtung der A-Säule 106, einer vertikalen Richtung (oder Lotrichtung) und/oder einer Normalen (oder Senkrechten) der horizontalen Ebene einen Winkel ein, der kleiner als 30°, beispielsweise kleiner als 5°, ist.

Der Zylinder des Gehäuses 124 ist über einen Steg mit einem Fuß der Scharnierabdeckung 114 verbunden. Der Steg kann einen rechtwinkligen Querschnitt aufweisen.

Eine Richtung der Auskragung kann gegenüber einer Längsrichtung (oder Fahrtrichtung) des Nutzfahrzeugs nach vorne und nach außen zur Fahrzeugseite (im Ausführungsbeispiel der Figur 2 zur Beifahrerseite) gegenüber der Längsrichtung geneigt sein. Beispielsweise ist in der horizontalen Ebene ein Neigungswinkel der Auskragung gegenüber der Längsrichtung größer als 30°, beispielsweise etwa 45°.

Der Fuß der Scharnierabdeckung 114 liegt mit der Anlagefläche 130 an der Oberfläche der A-Säule 106 an.

Eine oder mehrere Schraubverbindungen 132 befestigen die Scharnierabdeckung 114 an der A-Säule 106. Optional sind an der Anlagefläche 130 Verbindungsklammern angeformt, die (beispielsweise zur Verdrehsicherung der Scharnierabdeckung um die Schraubverbindung 132) mit an der A-Säule 106 befestigten Verbindungselementen in Eingriff bringbar sind oder stehen.

Im in Figur 2 gezeigten ersten Ausführungsbeispiel weist die Scharnierabdeckung 114 an ihrer Kante zur Fahrzeugtür 108 eine Aussparung 134 auf. Durch die Aussparung 134 verläuft ein Gewerbe des Scharniers 112, das an der Fahrzeugtür 108 befestigt ist.

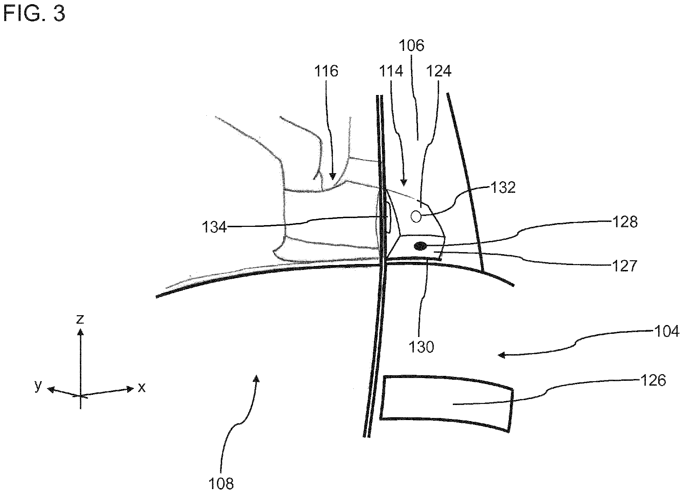

Figur 3 zeigt schematisch eine perspektivische Darstellung eines zweiten Ausführungsbeispiels der Scharnierabdeckung 114. Bezugszeichen, die mit jenen der Figur 2 übereinstimmen, betreffen gleiche, äquivalente oder ergänzbare Merkmale.

Im in Figur 3 gezeigten zweiten Ausführungsbeispiel der Scharnierabdeckung 114 bildet eine Seite (auch: Boden) des Gehäuses 124 die Anlagefläche 130. Die Objektivöffnung 128 ist in der Gehäusewand 127 des Gehäuses 124 angeordnet, die zur horizontalen Ebene x-y parallel und/oder zur Anlagefläche 130 senkrecht ist.

Im in Figur 3 gezeigten zweiten Ausführungsbeispiel vergrößert sich ein horizontaler Querschnitt des Gehäuses 124 in Richtung der Objektivöffnung, d. h. von oben nach unten im montierten Zustand der Scharnierabdeckung 114. Den größten Querschnitt bildet die Gehäusewand 127, in welcher die Objektivöffnung 128 angeordnet ist.

Die Scharnierabdeckung 114 und der türseitige Fuß 116 werden auch zusammenfassend als Seitenspiegelfuß bezeichnet.

Die Scharnierabdeckung 114 (insbesondere das Gehäuse 124) und/oder der Seitenspiegelfuß 116 sind aus einem Kunststoffmaterial (beispielsweise einem Thermoplast) gefertigt, vorzugsweise durch Spritzguss.

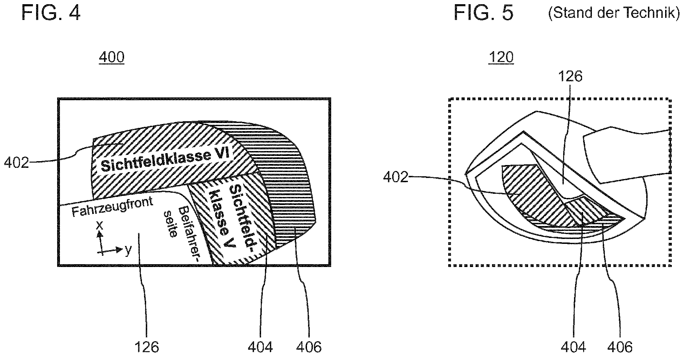

Figur 4 zeigt schematisch eine Wiedergabe des mittels der Bilderfassungseinheit im Gehäuse 124 erfassten Bildes 400. Das erfasste Bild 400 umfasst einen Frontbereich 402 der Fahrbahn (beispielsweise einen Bereich gemäß europäischer Sichtfeldklasse VI) und einen Seitenbereich 404 der Fahrbahn oder Fahrbahnseite (beispielsweise ein Bereich gemäß europäischer Sichtfeldklasse V). Ein erweiterter Seitenbereich 406 wird ebenfalls verzerrungsfrei im Bild 400 wiedergegeben.

Figur 5 zeigt den Frontspiegel 120 aus der Perspektive des Fahrerarbeitsplatzes im Fahrerhaus 102 mit den entsprechenden gespiegelten Bereichen 402, 404 und 406 (beispielsweise als schraffierte Flächen auf der Fahrbahn). Die Wiedergabe durch einen herkömmlichen Frontspiegel 120 ist gegenüber dem mittels der Scharnierabdeckung 114 erfassten Bild 400 nicht nur spiegelverkehrt, sondern auch erheblich verzerrt. Der erweiterte Seitenbereich 406 ist nahezu unkenntlich im Frontspiegel 120. Dagegen kann mittels der Scharnierabdeckung 114 nicht nur eine Verbesserung für den Frontbereich 402 und damit ein Ersatz für den Frontspiegel 120 erreicht werden. Optional kann auch im selben Bild 400 der Seitenbereich 404 erfasst und somit der Anfahrspiegel 122 ersetzt werden.

Durch einen in ihrer Form und dem Aufbau optimierte Scharnierabdeckung 114 mit integrierter Halterung für die Bilderfassungseinheit können gegenüber einem herkömmlichen Spiegel 120 Produktionskosten gesenkt und die Fahrzeugaerodynamik verbessert werden. Durch Weiterbildungen des Gehäuses 124 kann ferner das Gewicht der Scharnierabdeckung 114 optimiert werden.

Ein Signalkabel für das Bild 400 und/oder ein Kabel zur Spannungsversorgung der Bilderfassungseinheit kann, beispielsweise ohne zusätzliche Durchgangsausnehmungen in der Fahrzeugkarosserie, unter der A-Säule 106 verlegt werden. Der Kabelstrang kann durch den Verlauf in der A-Säule 106 ohne zusätzliche (innenseitige oder außenseitige) Verkleidungsbauteile unsichtbar verlegt sein.

Die Position und Ausrichtung der in der Scharnierabdeckung 114 integrierten Bilderfassungseinheit ermöglicht eine gute Darstellung rechtlich definierter Sichtfelder 402 und 404. Darüber hinaus ermöglicht die Position eine erhebliche Erweiterung des seitlichen Sichtbereichs 406, beispielsweise auf der Beifahrerseite und in Fahrtrichtung rechts. Ferner ist das Bild 400 der Bilderfassungseinheit ungespiegelt und weniger verzerrt.

### Bezugszeichenliste

- 100: Nutzfahrzeug
- 102: Fahrerhaus
- 104: Fahrzeugfront
- 106: A-Säule
- 108: Fahrzeugtür
- 110: Frontscheibe
- 112: Scharnier
- 114: Scharnierabdeckung an A-Säule
- 116: Seitenspiegelfuß an Fahrzeugtür
- 118: Seitenspiegel
- 120: Frontspiegel
- 122: Anfahrspiegel
- 124: Gehäuse für Bilderfassungseinheit
- 126: Windleitfläche
- 127: Gehäusewand
- 128: Objektivöffnung im Gehäuse
- 130: Anlagefläche der Scharnierabdeckung
- 132: Schraubverbindung der Scharnierabdeckung
- 134: Aussparung der Scharnierabdeckung
- 400: Anzeige
- 402: Bereich der Sichtfeldklasse VI
- 404: Bereich der Sichtfeldklasse V
- 406: Erweiterter Seitenbereich

## Patentansprüche

1. Scharnierabdeckung (114) für eine an einer A-Säule (106) eines Nutzfahrzeugs (100) angeschlagene Fahrzeugtür (108), umfassend:
eine Anlagefläche (130), die außenseitig an der A-Säule (106) auf Höhe eines Scharniers (112) der Fahrzeugtür (106) anliegt oder in Anlage bringbar ist, wobei die Anlagefläche (130) in einer horizontalen Ebene gekrümmt ist; und
ein Gehäuse (124) zur Aufnahme einer Bilderfassungseinheit und mit einer Objektivöffnung (128) zum Lichteinfall quer zur horizontalen Ebene.

2. Scharnierabdeckung nach Anspruch 1, wobei die Objektivöffnung (128) in einer Gehäusewand (127) des Gehäuses (124) angeordnet ist, die parallel zur horizontalen Ebene (x-y) ist.

3. Scharnierabdeckung nach Anspruch 1 oder 2, wobei die Objektivöffnung (128) im Gehäuse (124) bezüglich der Anlagefläche (130) so angeordnet ist, dass bei an der A-Säule (106) anliegender Anlagefläche (130) die Objektivöffnung (128) nach unten gerichtet ist.

4. Scharnierabdeckung nach einem der Ansprüche 1 bis 3, wobei eine Richtung des Lichteinfalls durch die Objektivöffnung senkrecht zur horizontalen Ebene (x-y) ist oder um weniger als 20° von einer Senkrechten zur horizontalen Ebene (x-y) abweicht.

5. Scharnierabdeckung nach einem der Ansprüche 1 bis 4, wobei die Anlagefläche (130) mindestens eine umlaufende Kante umfasst.

6. Scharnierabdeckung nach einem der Ansprüche 1 bis 5, wobei die Scharnierabdeckung (114) mindestens eine Durchgangsöffnung zur Schraubverbindung (132) der Scharnierabdeckung mit der A-Säule (106) aufweist, und/oder wobei die Scharnierabdeckung (114) Verbindungselemente zur Verbindung der Scharnierabdeckung mit der A-Säule (106) umfasst.

7. Scharnierabdeckung nach einem der Ansprüche 1 bis 6, wobei eine Gehäusewand (127) des Gehäuses (124), in der die Objektivöffnung (128) angeordnet ist, aus der Anlagefläche (130) auskragt.

8. Scharnierabdeckung nach einem der Ansprüche 1 bis 7, wobei das Gehäuse (124) einen Kabelkanal umfasst, der in eine Öffnung in der Anlagefläche (130) mündet.

9. Scharnierabdeckung nach einem der Ansprüche 1 bis 8, wobei die Anlagefläche (130) zumindest abschnittsweise senkrecht zur horizontalen Ebene (x-y) ist.

10. Nutzfahrzeug (100), an dessen A-Säule (106) eine Scharnierabdeckung (114) gemäß einem der Ansprüche 1 bis 9 mit darin aufgenommener Bilderfassungseinheit angeordnet ist.

11. Nutzfahrzeug nach Anspruch 10, wobei die Scharnierabdeckung (114) auf einer Höhe unterhalb einer Unterkante einer Frontscheibe (110) des Nutzfahrzeugs (100) angeordnet ist.

12. Nutzfahrzeug nach Anspruch 10 oder 11, wobei die Scharnierabdeckung (114) auf einer Höhe oberhalb von Trittstufen des Nutzfahrzeugs (100) angeordnet ist.

13. Nutzfahrzeug nach einem der Ansprüche 10 bis 12, ferner umfassend eine an einer Mittelkonsole des Nutzfahrzeugs (100) angeordnete Anzeige, die zur Bildwiedergabe mit der Bilderfassungseinheit in Signalverbindung steht.

14. Nutzfahrzeug nach Anspruch 13, wobei die Anzeige dazu ausgebildet ist, bei gelöster Feststellbremse und/oder Fahrt des Nutzfahrzeugs (100) mit einer Fahrtgeschwindigkeit von bis zu 10 km/h ein von der Bilderfassungseinheit erfasstes Bild wiederzugeben.

15. Nutzfahrzeug nach einem der Ansprüche 10 bis 14, ferner umfassend eine innenseitig an der A-Säule (106) angeordnete Anzeige, die dazu ausgebildet das von der Bilderfassungseinheit erfasste Bild wiederzugeben.

## Claims

1. Hinge cover (114) for a vehicle door (108) that is hinged on an A pillar (106) of a commercial vehicle (100) comprising:
a contact surface (130) that is in contact with or can be brought into contact with the A pillar (106) at the level of a hinge (112) of the vehicle door (106) from the outside, wherein the contact surface (130) is curved in a horizontal plane; and
a housing (124) for accommodating an image acquisition unit and with an objective aperture (128) for light incident transversely to the horizontal plane.

2. Hinge according to Claim 1, wherein the objective aperture (128) is disposed in a housing wall (127) of the housing (124) that is parallel to the horizontal plane (x-y).

3. Hinge according to Claim 1 or 2, wherein the objective aperture (128) is disposed in the housing (124) relative to the contact surface (130) so that with the contact surface (130) contacting the A pillar (106) the objective aperture (128) is oriented downwards.

4. Hinge cover according to any one of Claims 1 to 3, wherein a direction of the light incidence through the objective aperture is perpendicular to the horizontal plane (x-y) or deviates by less than 20° from a perpendicular to the horizontal plane (x-y).

5. Hinge cover according to any one of Claims 1 to 4, wherein the contact surface (130) comprises at least one circumferential edge.

6. Hinge cover according to any one of Claims 1 to 5, wherein the hinge cover (114) comprises at least one through opening for the screw connection (132) of the hinge cover to the A pillar (106), and/or wherein the hinge cover (114) comprises connecting elements for joining the hinge cover to the A pillar (106).

7. Hinge cover according to any one of Claims 1 to 6, wherein a housing wall (127) of the housing (124), in which the objective aperture (128) is disposed, protrudes from the contact surface (130).

8. Hinge cover according to any one of Claims 1 to 7, wherein the housing (124) comprises a cable channel that opens into an opening in the contact surface (130).

9. Hinge cover according to any one of Claims 1 to 8, wherein the contact surface (130) is perpendicular to the horizontal plane (x-y), at least partially.

10. Commercial vehicle (100), on the A pillar (106) of which is disposed a hinge cover (114) according to any one of Claims 1 to 9 with an image acquisition unit accommodated therein.

11. Commercial vehicle according to Claim 10, wherein the hinge cover (114) is disposed at a level below a lower edge of a front screen (110) of the commercial vehicle (100).

12. Commercial vehicle according to Claim 10 or 11, wherein the hinge cover (114) is disposed at a level above step treads of the commercial vehicle (100).

13. Commercial vehicle according to any one of Claims 10 to 12, further comprising a display disposed on a central console of the commercial vehicle (100) that has a signal connection to the image acquisition unit for image reproduction.

14. Commercial vehicle according to Claim 13, wherein the display is implemented to reproduce an image acquired by the image acquisition unit with the parking brake released and/or while the commercial vehicle (100) is travelling at a speed of travel of up to 10 km/h.

15. Commercial vehicle according to any one of Claims 10 to 14, further comprising a display disposed internally on the A pillar (106) that is implemented to reproduce the image acquired by the image acquisition unit.

## Revendications

1. Recouvrement de charnière (114) pour une porte de véhicule (108) montée sur une colonne A (106) d'un véhicule utilitaire (100), comprenant :
une surface d'appui (130) qui s'applique ou peut être amenée en appui du côté extérieur contre la colonne A (106) à la hauteur d'une charnière (112) de la porte du véhicule (106), la surface d'appui (130) étant courbée dans un plan horizontal ; et un boîtier (124) pour recevoir une unité de saisie d'images et comprenant une ouverture d'objectif (128) pour l'incidence de la lumière transversalement au plan horizontal.

2. Recouvrement de charnière selon la revendication 1, dans lequel l'ouverture d'objectif (128) est disposée dans une paroi de boîtier (127) du boîtier (124) qui est parallèle au plan horizontal (x-y).

3. Recouvrement de charnière selon la revendication 1 ou 2, dans lequel l'ouverture d'objectif (128) est disposée dans le boîtier (124) par rapport à la surface d'appui (130) de telle sorte que lorsque la surface d'appui (130) s'applique contre la colonne A (106), l'ouverture d'objectif (128) soit orientée vers le bas.

4. Recouvrement de charnière selon l'une quelconque des revendications 1 à 3, dans lequel une direction de l'incidence de lumière à travers l'ouverture d'objectif est perpendiculaire au plan horizontal (x-y) ou s'écarte d'une perpendiculaire au plan horizontal (x-y) de moins de 20°.

5. Recouvrement de charnière selon l'une quelconque des revendications 1 à 4, dans lequel la surface d'appui (130) comprend au moins une arête périphérique.

6. Recouvrement de charnière selon l'une quelconque des revendications 1 à 5, le recouvrement de charnière (114) présentant au moins une ouverture de passage pour le raccord par vissage (132) du recouvrement de charnière avec la colonne A (106), et/ou le recouvrement de charnière (114) comprenant des éléments de raccordement pour raccorder le recouvrement de charnière à la colonne A (106).

7. Recouvrement de charnière selon l'une quelconque des revendications 1 à 6, dans lequel une paroi de boîtier (127) du boîtier (124), dans laquelle est disposée l'ouverture d'objectif (128), fait saillie hors de la surface d'appui (130).

8. Recouvrement de charnière selon l'une quelconque des revendications 1 à 7, dans lequel le boîtier (124) comprend un canal de câble qui débouche dans une ouverture dans la surface d'appui (130).

9. Recouvrement de charnière selon l'une quelconque des revendications 1 à 8, dans lequel la surface d'appui (130) est au moins en partie perpendiculaire au plan horizontal (x-y).

10. Véhicule utilitaire (100), au niveau de la colonne A (106) duquel est disposé un recouvrement de charnière (114) selon l'une quelconque des revendications 1 à 9 avec une unité de saisie d'images reçue dans celui-ci.

11. Véhicule utilitaire selon la revendication 10, dans lequel le recouvrement de charnière (114) est disposé à une hauteur en dessous d'un bord inférieur d'une vitre avant (110) du véhicule utilitaire (100).

12. Véhicule utilitaire selon la revendication 10 ou 11, dans lequel le recouvrement de charnière (114) est disposé à une hauteur au-dessus de marches du véhicule utilitaire (100).

13. Véhicule utilitaire selon l'une quelconque des revendications 10 à 12, comprenant en outre un affichage disposé sur une console centrale du véhicule utilitaire (100), qui est en liaison signalétique pour reproduire des images avec l'unité de saisie d'images.

14. Véhicule utilitaire selon la revendication 13, dans lequel l'affichage est réalisé pour reproduire une image saisie par l'unité de saisie d'images lorsque le frein de service est relâché et/ou que le véhicule utilitaire (100) roule à une vitesse de conduite allant jusqu'à 10 km/h.

15. Véhicule utilitaire selon l'une quelconque des revendications 10 à 14, comprenant en outre un affichage disposé du côté intérieur sur la colonne A (106), qui est réalisé pour reproduire l'image saisie par l'unité de saisie d'images.
